# EUROPEAN PATENT APPLICATION

(11) **EP 0 993 853 A2**
(43) Date of publication of application: **19.04.2000**
(21) Application number: 99830643.5
(22) Date of filing: 11.10.1999
(51) Int. Cl.: B01D 29/41, B01D 29/96

(54) **A device for filtering liquid substances**

(30) Priority: 16.10.1998 IT BO980588
(71) Applicant: Filtra di Pruni S. & C. S.n.c., 40012 Calderara di Reno (Bologna) (IT)
(72) Inventor: Mazzoli, Mario, 40131 Bologna (IT)
(74) Representative: Lanzoni, Luciano

(57) **Abstract**

A device (1; 100) for filtering liquid substances comprises a container (2) to which two pipes (30, 34) are connected, respectively an inlet pipe and an outlet pipe for a liquid substance mixed with sediment. The inside of the container (2) mounts a shaft (10) that rotates about a longitudinal axis (3) and that has a coaxial cavity (11) made in a part of it and leading out of the container (2) at one end of the shaft (10). The shaft (10) mounts in a substantially rigid manner a plurality of filtering elements (18) and has coaxially keyed to it an impeller (12) of a hydraulic motor (13) housed inside the container (2), where a pipe (16) is designed to direct a flow of liquid substance mixed with sediment in such a way as to cause the shaft (10) to turn during cleaning of the filtering elements (18).

## Description

The present invention relates to a device for filtering liquid substances.

In the description which follows, reference is made to device for filtering irrigation water drawn from canals, springs, rivers, etc., but without thereby restricting the scope of the inventive concept, which may also apply to a device for filtering any liquid substance containing impurities.

At the present time, water used for irrigation purposes is normally pumped from canals, springs, rivers, etc. and must be filtered before reaching the crops to be irrigated.

This is because the water from these sources has a high content of impurities in suspension, such as mud, sand, grass, seeds, small animals, etc., while the nozzles that are usually used to spray the water on the crops to be irrigated have very small outlets, with a cross section area of approximately one square millimetre, for example. Obviously, if the impurities are not removed from the water immediately downstream of the pump which draws the water from the source and conveys it to the irrigation nozzles, the nozzles get clogged up very easily.

The degree of filtering required normally varies from 40 to 100 microns, depending on the spray nozzles used.

The oldest and most widely used filtering system comprises two filters in line: the first filter, the larger of the two, is a sand filter that acts as a precleaner to remove most of the impurities, while the second, smaller filter is a mesh or sleeve filter and makes it possible to reach the final degree of filtering.

In the sand filter, the filtering element consists of bed of grit (diameter 8-10 mm) or quartzite (diameter 1-2 mm), depending on the required degree of filtering. This is a vertical filter into which the dirty water flows from above, flows through the filtering bed, into a collection tank or tube and from there out of the filter.

In the mesh filter, the filtering element is a cylinder of electro-welded wire mesh, while in the sleeve filter, the filtering element is a cylinder of polyester fabric placed over a wire mesh cylinder. If the water comes from an artesian well or from a river, it has a high content of suspended solids (sand) so another specific type of filter (cyclone separator) must be installed to separate the sand from the water.

The filtering devices mentioned above have several disadvantages.

First of all, they are extremely large and heavy (in the order of several hundred kilos).

Further, the cleaning intervals of the filters are very short and, to keep them operating at acceptable levels of efficiency, they must be cleaned approximately every fifteen minutes by flowing water through them in the opposite direction for about five minutes. That means that for every hour, approximately twenty minutes are lost in cleaning the filters. Also, the water used to clean the filters cannot be used for irrigation purposes and must be thrown away.

Moreover, for certain sand filter sizes, the cleaning interval of the sleeve filter is not sufficient to enable the reverse flow cleaning of the sand filter and so another sand filter of the same size must be installed.

For extensive irrigation areas, batteries of sand filters connected to each other in such a way as to clean each other are used, with the result that the costs of the filtering installation may be extremely high.

The aim of the present invention is to overcome the above mentioned disadvantages by providing a filtering device that is not only extremely functional but also relatively small in size and economical.

The invention, as characterized in the claims, provides a filtering device for liquid substances characterized in that it comprises a container to which two pipes, an inlet and an outlet for a liquid substance mixed with sediment, are connected, the inside of the container mounting a shaft that rotates about a longitudinal axis and that has a coaxial cavity made in a part of it and leading out of the container at one end of the shaft, the shaft mounting in a substantially rigid manner a plurality of filtering elements and having coaxially keyed to it an impeller of a hydraulic motor housed inside the container and driven by the liquid substance mixed with sediment.

The technical characteristics of the invention, according to the above mentioned aim, are described in the claims below and its advantages are apparent from the detailed description which follows with reference to the accompanying drawings, which illustrate a preferred embodiment of the invention and in which:
- Figure 1 is a schematic cross section of a device for filtering liquid substances made according to the present invention;
- Figures 2 to 5 are detail views showing parts or groups of parts of the device shown in Figure 1;
- Figure 6 is a view of some parts of the device disclosed shown in a cross section made by cutting the device as illustrated in Figure 1 in a plane VI-VI;
- Figure 7 is a schematic front view of an installation equipped with the device illustrated in Figure 1; and
- Figure 8 is a schematic cross section of another embodiment of the filtering device illustrated in the other drawings.

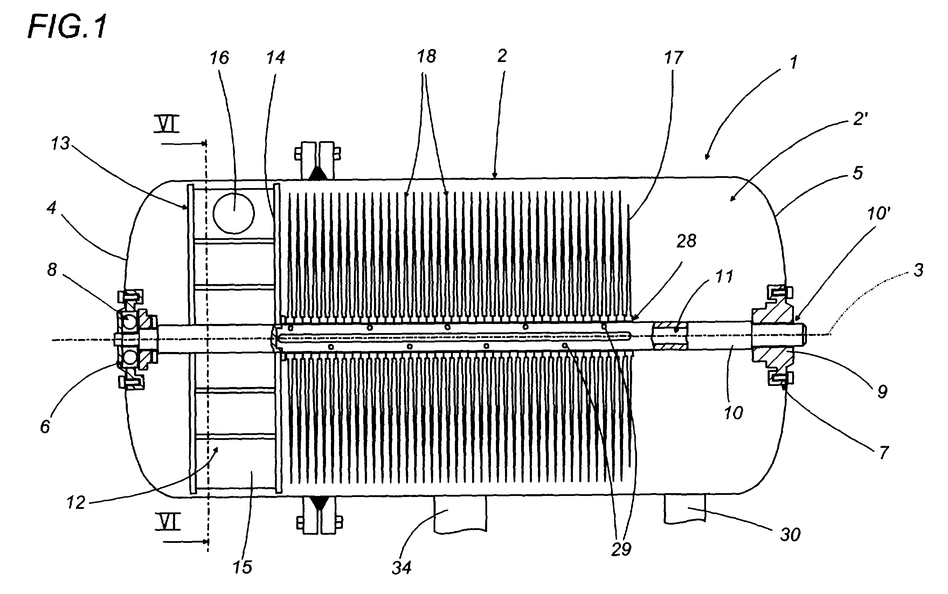

With reference to the accompanying drawings, and in particular, Figure 1, the numeral 1 indicates as a whole a device for filtering liquid substances.

The device 1 comprises a tank or container 2 that is substantially cylindrical in shape and that, when used, extends along a horizontal axis 3.

At its two ends, the container 2 has two rounded surfaces 4 and 5 (left and right in Figure 1), having respective axial holes 6 and 7 made in them. The hole 6 coaxially houses a ball bearing 8 while the hole 7 coaxially houses a self-lubricating bush 9. The bearing 8 and the bush 9 coaxially support a shaft 10 which extends along the axis 3 and which, for the reasons explained in more detail below, has a cavity 11 coaxial to it, said cavity 11 being made in the part of the shaft 10 facing the bush 9 and leading out of the container 2 through an end portion 10' of the shaft 10 housed in the bush 9 itself.

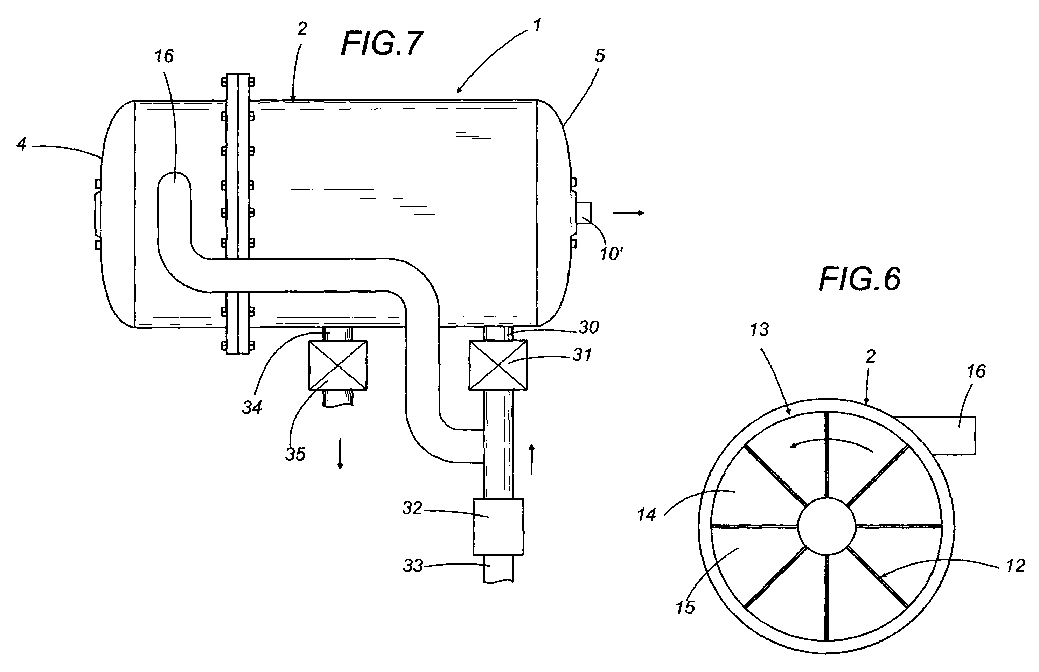

The part of the shaft 10 located on the left-hand side in Figure 1 has coaxially keyed to it an impeller 12 of a hydraulic motor consisting, for example, of a vane turbine 13. The two sides of the impeller 12 perpendicular to the axis 3 are delimited by two identical discoidal elements 14 which are coaxially housed in the container 2 and whose diameter is slightly smaller than the substantially cylindrical chamber 2' defined by the inside of the container 2. As illustrated in more detail in Figure 6, the cavity 15 inside the container 2 and defined by the discoidal elements 14 and by a part of the inner cylindrical surface of the container 2 communicates with a pipe 16, one end of which is connected to the container 2 and the section of it on the side connected to the container 2 being positioned in such a way that it is substantially tangential to the periphery of the impeller 12.

As shown in Figure 1, the part of the shaft 10 between the vane turbine 13 and a discoidal element 17 keyed to the shaft 10 close to the wall 5, mounts a plurality of discoidal filtering elements 18. The filtering elements 18 are placed side by side and are fixed to the shaft 10 in such a way that they cannot move along the shaft.

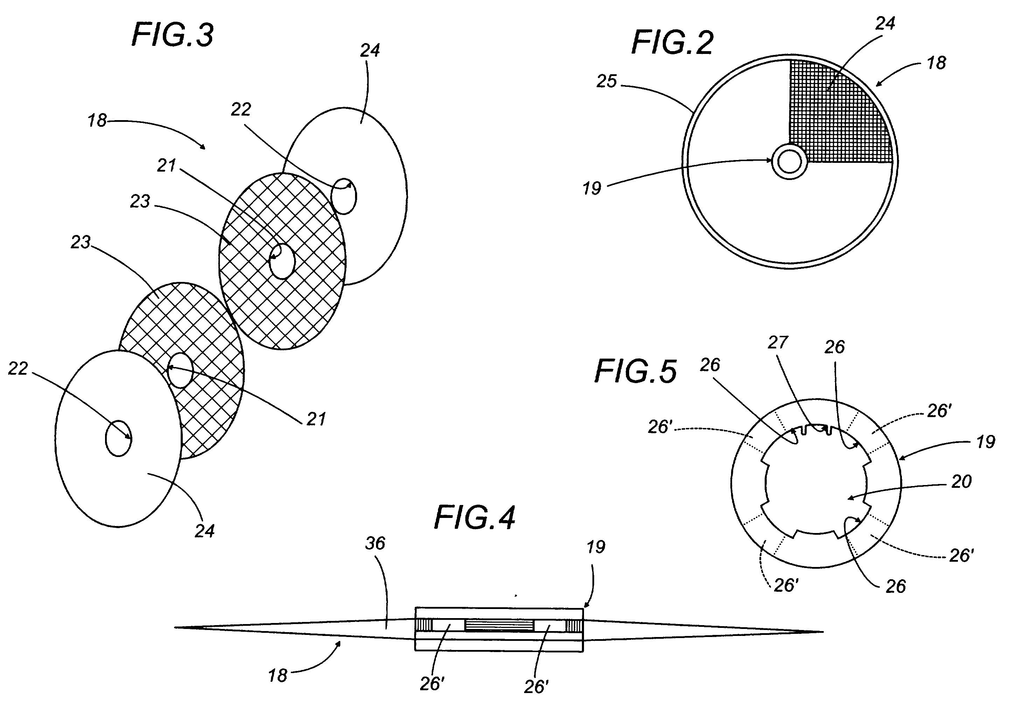

As shown in particular in Figures 2 to 5, each filtering element 18 comprises a hub or sleeve 19, substantially cylindrical in shape having an axial cavity 20 into which the shaft 10 can be fitted with a slight amount of play.

Each side of each sleeve 19 is connected to the central areas of filtering means and opposing means consisting, respectively, of a disc 23 and a disc 24, being equal in diameter, where the central areas have respective circular holes 21 and 22 slightly smaller in diameter than the sleeve 19. The discs 23 and 24 are made preferably of monofilament polyester netting and monofilament polyester fabric, respectively. The discs 23 are located in the gaps between the discs 24 and act mainly as opposing elements designed to keep the discs 24 associated with each filtering element 18 well stretched and spaced apart. In other words, their function is to keep the discs 24 in the right shape and position despite the pressure exerted on the discs 24 by the water present in the container 2. Around the edges of the discs 23 and 24 connected to each sleeve 19 there is a band 25 made, for example, from polyester tape applied by triple stitching.

The surface of each sleeve 19 defined by one of said cavities 20 has grooves 26 made in it at angular intervals of 90° around the longitudinal axis of the sleeve 19 itself and extending in directions parallel to this axis, which, when the sleeve 19 is fitted to the shaft 10, is parallel to the axis 3. Each sleeve 19 also has another longitudinal groove 27 parallel to the grooves 26 made in a part of the surface of the cavity 20 between two adjacent grooves 26 and designed to be longitudinally engaged by a contact element consisting of a longitudinal protrusion 28 made in the lateral surface of the shaft 10 on which the sleeves 19 must be fitted. The protrusion may consist, for example, of a key or tab.

On at least part of the surfaces of the sleeves 19 that have a groove 26 made in them there is a passage 26' going through the sleeve 19 itself substantially radially (Figure 5 shows four passages 26').

The shaft 10 also has four rows of radial holes 29 made at angular intervals of 90° around its axis 3, the ends of the holes 29 inside the shaft 10 leading into the aforementioned cavity 11.

As shown in Figures 1 to 4, a portion at the bottom of the container 2, between the discoidal element 17 and the bush 9, communicates through a hole that is not illustrated made in the container 2 itself with a pipe 30 which communicates through a valve 31 with a pump that is schematically illustrated as a block 32 and which communicates through another pipe 33 with a source of irrigation water consisting, for example, of a canal, a spring, a river or a lake.

A part of the pipe 30 located upstream of the valve 31, with reference to the water flow direction inside the pipe 30 itself, communicates with the pipe 16 that leads to the part of the container 2 which houses the vane turbine 13.

A longitudinal middle lower portion of the container 2 communicates, through a hole that is not illustrated made in the container 2 itself, with a pipe 34 for draining the water used to clean the filter device 1. On the pipe 34, there is a valve 35 whose function is described in more detail below.

When the device is in operation and filtering irrigation water, the shaft 10 does not turn, the valve 31 is open and the valve 35 closed. The water, drawn from the source by the pump 32 and entering the container 2 continuously by way of the pipe 30, goes through the surface of the discs 23 and 24 of each filtering element 18 and makes its way into the chamber 36 between each pair of adjacent, peripherally connected discs 23.

The filtered water reaches the grooves 26 of the sleeves 19 through the passages 26' and from the grooves 26, flows into the cavity 11 in the shaft 10 through the holes 29 and then out of the cavity 11 through the end portion 10' of the shaft 10. At this point, the water is ready to be used for irrigation purposes.

As the water flows through the discs 23 and 24, as described above, the sediment is trapped on the outer surface of the discs 24, forming a layer which tends to gradually clog up the mesh of the fabric from which the discs 24 are made. This gradually increases the difference between the pressure of the water flowing into the container 2 and that of the water flowing out of the container 2 and raises the pressure of the water inside the container 2.

When the internal pressure reaches a defined value, for example one/two BARs, checked visually or detected automatically, the valve 31 is closed and the valve 35 opened; this causes the water flowing from the pump 32 to be diverted to the vane turbine 13.

The impeller 12 of the turbine 13 thus starts rotating, and the shaft 10, which is connected to it, starts turning rapidly, causing the filtering elements 18 which are rigidly mounted on the shaft 10 itself, to turn with it. The water flowing over the vanes of the impeller 12 forces the impeller 12 to rotate and flows continuously out of the cavity 15 through the passage between the discoidal elements 14 and the inner cylindrical surface of the container 2.

The centrifugal force generated by the rotation of the impeller 12 detaches the sediment from the outer surfaces of the discs 24 and to mix with the water in the container 2. This water, with the sediment suspended in it, is forced out of the container 2 through the pipe 34.

After a preset time, the valve 31 opens again, the valve 35 closes, the vane turbine 13, together with the shaft 10 and the filtering elements 18, stops turning and the filtering device 1 is ready to filter fresh incoming water again.

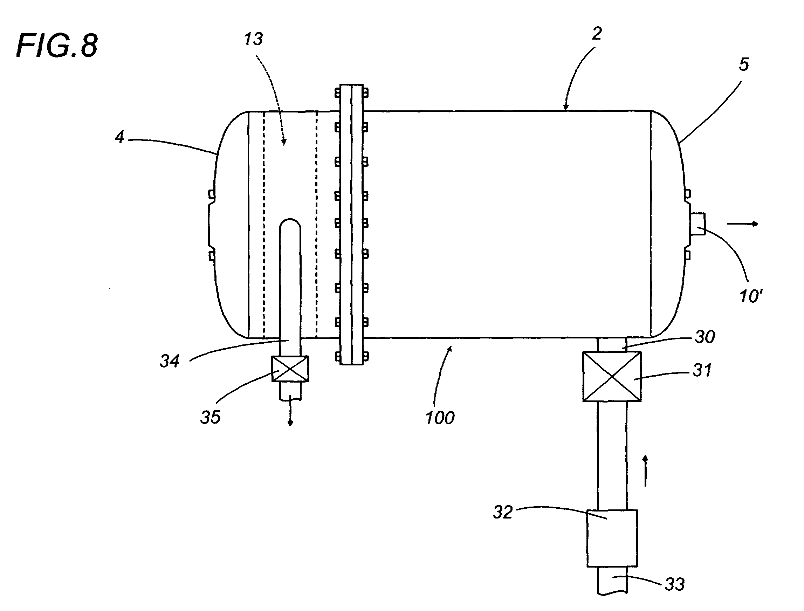

Figure 8 shows a filtering device 100 that constitutes another embodiment of the filtering device 1 described above. The reference numbers used in Figure 8 relative to the filtering device 100 are the same as those used to indicate the parts of the filtering device 1.

In the filtering device 100, the pipe 16 is not envisaged and the pipe 34 is connected preferably to a cylindrical portion of the container 2, substantially adjacent to the vane turbine 13; the pipe 34 is preferably vertical, extending downwards, and the section of it connected to the container 2 is fitted in such a way that it is substantially tangential to the periphery of the impeller 12.

In the filtering device 100, the filtering of the water mixed with sediment and the cleaning of the filtering elements 18 occur in the same way as described above, except that, during the cleaning operation, the valve 35 is opened but the valve 31 is not closed. Consequently, when the valve 35 is opened, the impeller 12 and the vane turbine 13 are made to turn rapidly by the negative pressure created at a portion of the impeller 12 by the water mixed with sediment flowing out through the pipe 34.

It should be noted that a cleaning operation as described above carried out on the filtering devices 1 and 100 takes approximately ten/twenty seconds, compared to the five minutes required to clean the above mentioned conventional filtering devices. Moreover, the fact that the vane turbine 13 is driven by the dirty water without necessitating either electrical or oil-hydraulic power, which is required by some conventional filtering devices, makes it possible to provide filtering devices 1 and 100 that are relatively simple and economical and that need little maintenance.

Furthermore, the filtering devices 1 and 100 are considerably smaller and lighter than the conventional filtering devices most commonly used, even though the filtering devices 1 and 100 have a large filtering surface.

The invention described can be subject to modifications and variations without thereby departing from the scope of the inventive concept.

For example, the turbine 13 may be of different type from the one illustrated schematically, and the filtering elements 18 may also have a different shape from that described. Moreover, all the details of the invention may be substituted by technically equivalent parts.

## Claims

1. A filtering device for liquid substances characterized in that it comprises a container (2) to which two pipes (30, 34), respectively an inlet and an outlet for a liquid substance mixed with sediment, are connected; the inside of the container (2) mounting a shaft (10) that rotates about a longitudinal axis (3) and that has a coaxial cavity (11) made in a part of it and leading out of the container (2) at one end of the shaft (10); the shaft (10) mounting in a substantially rigid manner a plurality of filtering elements (18) and having coaxially keyed to it an impeller (12) of a hydraulic motor (13) housed inside the container (2) and driven by the liquid substance mixed with sediment.

2. The device according to claim 1, characterized in that inside each filtering element (18) there is a chamber (36) that communicates with the cavity (11) in the shaft (10) through holes (29) made in the lateral surface of the shaft itself.

3. The device according to claim 2, characterized in that each filtering element (18) comprises a sleeve (19) into which the shaft (10) can be fitted, and having, on the surface of it that contacts the lateral surface of the shaft, at least one groove (26) parallel to the longitudinal axis (3) of the sleeve (19) and at least one passage (26') passing through the sleeve itself in a substantially radial manner; the sleeve (19) mounting the filtering means (23) which are designed to filter the liquid substance.

4. The device according to claim 3, characterized in that the sleeve (19) also mounts opposing means (24) that act on the filtering means (23) in such a manner as to keep the latter in the right shape and properly spaced apart.

5. The device according to claim 3 or 4, characterized in that there are four grooves (26).

6. The device according to any of the foregoing claims from 3 to 5, characterized in that the surface of each sleeve (19) that is to come into contact with the lateral surface of the shaft (10) has another groove (27) made in it between and parallel to two grooves (26), said additional groove (27) being designed to engage with a contact element (28) attached to the shaft (10).

7. The device according to any of the foregoing claims from 3 to 6, characterized in that the grooves (26) are made so that they substantially face the rows of holes (29).

8. The device according to any of the foregoing claims from 3 to 7, characterized in that each filtering element (18) comprises on both axially opposite sides of the related sleeve (19) two discs (23, 24), that are, respectively, made from netting and fabric and constitute said filtering means and opposing means, have corresponding central holes (21, 22) which are slightly smaller in diameter than the sleeve (19), and are connected to one side of the sleeve itself; the discs (23) made of netting being located in the gaps between the discs (24) made of fabric, and the edges of the discs (23, 24) having a band (25) all around them.

9. The device according to claim 8, characterized in that the netting discs (23) are made from monofilament polyester netting and the fabric discs (24) are made from monofilament polyester fabric.

10. The device according to any of the foregoing claims from 1 to 9, characterized in that the filtering elements (18) are placed side by side along the portion of the shaft (10) that has the cavity (11) made in it.

11. The device according to any of the foregoing claims from 1 to 10, characterized in that the hydraulic motor consists of a vane turbine (13).

12. The device according to any of the foregoing claims from 1 to 11, characterized in that there is a valve element (31, 35) fitted on each of the inlet and outlet pipes (30, 34) for a liquid substance mixed with sediment.

13. The device according to any of the foregoing claims from 1 to 12, characterized in that it comprises another pipe (16) leading to the hydraulic motor (13) and designed to direct a flow of liquid substance mixed with sediment to the impeller (12) so as to cause the shaft (10) to turn during the cleaning of the filtering elements (18).

14. The device according to claim 13 when it isl dependent on claim 12, characterized in that the additional pipe (16) communicates with the inlet pipe (30) upstream of the valve element (31) with reference to the direction of flow of the liquid substance inside the inlet pipe (30) itself.

15. The device according to claim 13, when it is dependent on claim 12, or according to claim 14, characterized in that during filtering operations, the valve element (31) connected with the inlet pipe (30) is open, and the valve element (35) connected with the outlet pipe (34) is closed, whereas during cleaning of the filtering elements (18), the valve element (31) connected with the inlet pipe (30) is closed, and the valve element (35) connected with the outlet pipe (34) is open.

16. The device according to any of the foregoing claims from 1 to 12, characterized in that the outlet pipe (34) is connected to a portion of the container (2) substantially adjacent to the hydraulic motor (13) and the section of it connected to the container (2) is positioned in such a way that it is substantially tangential to the periphery of the impeller (12) of the hydraulic motor (13).

17. The device according to claim 16, when it is dependent on claim 12, characterized in that during filtering operations, the valve element (31) connected with the inlet pipe (30) is open, and the valve element (35) connected with the outlet pipe (34) is closed, whereas during cleaning of the filtering elements (18), both the valve elements (31, 35) are open.

18. The device according to any of the foregoing claims from 1 to 17, characterized in that the liquid substance is water used for irrigation purposes.
